(19) Europäisches Patentamt
European Patent Office
Office européen des brevets

(11) EP 0 568 074 B1

(12) **EUROPÄISCHE PATENTSCHRIFT**

(45) Veröffentlichungstag und Bekanntmachung des Hinweises auf die Patenterteilung:
**18.09.1996 Patentblatt 1996/38**

(51) Int. Cl.[6]: **C01G 17/04**, C07F 7/00

(21) Anmeldenummer: **93106989.2**

(22) Anmeldetag: **29.04.1993**

# (54) Verfahren zur Herstellung von Germaniumdihalogenid-Ether-Addukten

Process for the preparation of germanium dihalide ether adducts

Procédé pour la préparation de produits d'addition de dihalégenure de germanium éther

(84) Benannte Vertragsstaaten:
**DE GB IT**

(30) Priorität: **30.04.1992 DE 4214281**

(43) Veröffentlichungstag der Anmeldung:
**03.11.1993 Patentblatt 1993/44**

(73) Patentinhaber: **Consortium für elektrochemische Industrie GmbH**
**D-81379 München (DE)**

(72) Erfinder:
- **Herrmann, Wolfgang, Prof. Dr.**
  **W-8050 Freising (DE)**
- **Denk, Michael, Dr.**
  **W-8000 München 90 (DE)**

(56) Entgegenhaltungen:
**US-A- 3 401 183**

- **JOURNAL OF THE CHEMICAL SOCIETY. DALTON TRANSACTIONS Bd. 8, 1986, LEICHTWORTH Seiten 1551 - 1556 TORGNY FJELDBERG 'subvalent group 4b metal alkyls and amides.'**
- **JOURNAL OF ORGANOMETALLIC CHEMISTRY Bd. 56, 1973, LAUSANNE CH Seiten 1 - 39 SATGE J. 'divalent germanium species as starting materials and intermediates in organo germanium chemistry'**
- **CHEMICAL ABSTRACTS, vol. 77, 1972, Columbus, Ohio, US; abstract no. 5581q, NAMETKIN 'hydrogen-halide exchange between germanium tetrachloride and some organosilicon hydride in diethyl ether' Seite 496 ;**
- **CHEMICAL ABSTRACTS, vol. 94, no. 24, Juni 1981, Columbus, Ohio, US; abstract no. 201930t, KOLESNIKOV 'simple method for the preparation of pure trichlorogermane' Seite 684 ;**
- **PATENT ABSTRACTS OF JAPAN and JP-A-56 032 485**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 568 074 B1

Printed by Rank Xerox (UK) Business Services
2.13.4/3.4

## Beschreibung

Die Erfindung betrifft ein Verfahren zur Herstellung von Addukten eines Germaniumdihalogenids mit einem Ether, insbesondere die Herstellung des Adduktes von Germaniumdichlorid mit 1,4-Dioxan.

Das Element Germanium hat in vielen Bereichen der industriellen Chemie sehr an Bedeutung gewonnen. Die Anwendungen reichen von der gezielten Dotierung von Heterogenkatalysatoren über die Herstellung germaniumhaltiger Pharmaka bis zur Gasphasenabscheidung von Germaniumoxid auf Spezialgläser. In der Halbleiterindustrie geraten bei der Suche nach zukünftigen Substraten für extrem schnelle und höchstintegrierte Bauelemente halbleitende Germanium/Silicium-Legierungen immer stärker in den Brennpunkt des Interesses. Konsequenterweise werden auch potentielle Germaniumquellen verstärkt erforscht. In dieser Hinsicht spielen Verbindungen des zweiwertigen Germaniums, insbesondere das als universeller Grundstoff einsetzbare Germaniumdichlorid, aufgrund ihrer besonderen Reaktivität eine sehr wichtige Rolle.

Germaniumdichlorid weist jedoch einige schwerwiegende Nachteile auf. So ist es unbeständig und zerfällt bereits bei Raumtemperatur unter Disproportionierung in Germaniumtetrachlorid und niedervalente, vorwiegend unlösliche Germaniumchloride. Der hohe Aufwand, der für die Synthese und Lagerung betrieben werden muß, läßt den Einsatz von Germaniumdichlorid auch in Zukunft unattraktiv erscheinen.

Als Alternative bieten sich Addukte eines Germaniumdihalogenids mit einem Ether an. Beispielsweise handelt es sich bei dem Addukt von Germaniumdichlorid mit 1,4-Dioxan um eine kristalline, bei Raumtemperatur lagerfähige Verbindung mit definierter Stöchiometrie und Struktur. Chemisch verhält sich dieses Addukt mit der Formel $GeCl_2.(C_4H_8O_2)$ genauso wie das solvensfreie Germaniumdichlorid, so daß die Substitution von letzterem bei vielen Anwendungen naheliegt.

Allerdings sind die bisher bekannten Verfahren zur Herstellung derartiger Addukte ebenfalls aufwendig und kostenintensiv. So erfordert beispielsweise die verbreitetste Herstellungsmethode für $GeCl_2.(C_4H_8O_2)$ eine zweistufige Synthese: Zunächst muß das oxidationsempfindliche und thermolabile Germanochloroform aus Germanium und Chlorwasserstoff im Verbrennungsrohr bei ca. 450°C synthetisiert und destillativ gereinigt werden. Dieses wird daran anschließend unter Abspaltung eines Teils des im ersten Schritt eingesetzten Chlorwassertoffes durch die Reaktion mit 1,4-Dioxan bei Raumtemperatur zum Addukt umgesetzt. Dieses komplizierte Herstellungsverfahren ist bei vertretbarem Aufwand auf geringe Produktmengen pro Ansatz beschränkt.

Ein anderer Syntheseweg, der über die gezielte Reduktion von Germaniumtetrachlorid mit Triethylsilan führt, scheiterte bisher an der mangelnden Selektivität der Reaktion. Anstatt des gewünschten Produktes entstehen hauptsächlich niedervalente, meist unlösliche und nicht näher charakterisierbare Germaniumchloride. Im Journal Of The Chemical Society, Dalton Transactions, Band 8 von 1986 ist auf den Seiten 1551-1556 beschrieben, daß die Reduktion mit Tri-n-butylzinnhydrid als Reduktionsmittel gelingt.

Die Aufgabe der Erfindung bestand darin, ein einfach durchzuführendes, einstufiges Herstellungsverfahren für Addukte eines Germaniumdihalogenids mit einem Ether, insbesondere für das Addukt von Germaniumdichlorid mit 1,4-Dioxan anzugeben, das, ausgehend von leicht zugänglichen Einsatzstoffen, die Gewinnung des Zielproduktes in beliebigen Ansatzgrößen gestattet.

Die Lösung wurde durch ein Verfahren gemäß des Oberbegriffes des Anspruch 1 gefunden, das dadurch gekennzeichnet ist, daß ein Germaniumtetrahalogenid mit einem Organosilan als Reduktionsmittel unter Zusatz eines Metallhydrids in Anwesenheit eines Ethers und gegebenenfalls in Anwesenheit eines organischen Lösemittels umgesetzt wird.

Überraschenderweise nimmt die oben erwähnte Reduktion von Germaniumtetrachlorid mit Triethylsilan in Gegenwart von 1,4-Dioxan einen unerwarteten Verlauf, wenn dem Reaktionsgemisch mindestens katalytische Mengen von Lithiumaluminiumhydrid zugesetzt werden. In diesem Fall entsteht nebenproduktfrei und in hohen Ausbeuten das Addukt von Germaniumdichlorid mit 1,4-Dioxan. Es zeigt sich ferner, daß die Reaktion auch auf andere Germaniumtetrahalogenide, Organosilane und Ether übertragen werden kann und auch nicht auf Lithiumaluminiumhydrid als Metallhydrid beschränkt ist.

Typischerweise werden das Germaniumtetrahalogenid und das hydridische Reduktionsmittel, insbesondere ein Organosilan, in äquimolaren Mengen eingesetzt, obwohl auch ein Reduktionsmittel-Überschuß von bis zu 2,5 Moläquivalenten zweckmäßig sein kann. Der Anteil der Etherkomponente im Reaktionsgemisch kann in weiten Bereichen, abhängig vom eingesetzten Ethertyp, gewählt werden. Äquimolare Mengen an Ether in bezug auf das Germaniumtetrahalogenid sind jedoch mindestens erforderlich. Gegebenenfalls wird die Reduktion des Germaniumtetrahalogenids in Gegenwart eines organischen Lösemittels durchgeführt, das weder an der Reduktion selbst beteiligt ist noch unter den vorherrschenden Bedingungen mit dem Zielprodukt zu reagieren vermag. Wesentliches Kennzeichen der Erfindung ist, das Metallhydrid zumindest in katalytischen Mengen von 0,01 bis 0,1 mol% bezogen auf das Germaniumtetrahalogenid, an der Umsetzung zu beteiligen. Die vorteilhaften Reaktionstemperaturen von 20 bis 120°C sind insbesondere von der Wahl des Lösemittels und/oder des Ethertyps abhängig. Es ist deshalb nicht ausgeschlossen, daß bei einer geeigneten Auswahl auch Reaktionstemperaturen außerhalb des angegebenen Bereichs zweckmäßig sein können. Dasselbe gilt auch hinsichtlich der günstigsten Reaktionszeiten. Sie werden sinnvollerweise in Vorversuchen ermittelt. Bisher haben sich Reaktionszeiten von 5 bis 100 Stunden bei einem zufriedenstellenden Umsatz als ausreichend gezeigt. Die Produktisolierung erfolgt nach den üblichen Methoden der präparativen Chemie, beispielsweise durch quantitatives Ausfällen infolge einer Temperaturerniedrigung auf -30 bis -70°C, wobei alle Begleitstoffe gelöst bleiben.

Das erfindungsgemäße Verfahren wird bevorzugt zur Herstellung von Etheraddukten des Germaniumdichlorids und des Germaniumdibromids eingesetzt.

Unter Reduktionsmitteln sind insbesondere Organosilane mit der Formel $R_{4-n}SiH_n$ zu verstehen, worin n eine ganze Zahl von 1 bis 3 bedeutet und R einen einwertigen aliphatischen Rest mit 1 bis 12 Kohlenstoffatomen oder einen cycloaliphatischen oder aromatischen Rest mit 6 bis 18 Kohlenstoffatomen oder eine Trialkylsilyl-Gruppe $R'_3Si$-darstellt, wobei R' dieselbe Bedeutung wie R hat. Besonders bevorzugt werden Dimethylchlorsilan, Trichlorsilan, Triethylsilan, Diphenylsilan, Diphenylchlorsilan und Tris(trimethylsilyl)silan eingesetzt.

Vom Reduktionsmittel ist das zur Durchführung des erfindungsgemäßen Verfahrens notwendige, zumindest in katalytischen Mengen eingesetzte Metallhydrid zu unterscheiden. Vorzugsweise werden ionisch aufgebaute oder komplexe Metallhydride, insbesondere Lithiumaluminiumhydrid, Natrium- und Kaliumalanat, Lithium-, Natrium- und Kaliumboranat oder komplexe Hydride eines Metalls der 3. Hauptgruppe mit der Formel $M^1[M^2H(OR)_3]$ verwendet, wobei $M^1$ Lithium, Natrium oder Kalium und $M^2$ bevorzugt Aluminium oder Bor bedeuten. Der Rest R hat die obenstehende Bedeutung.

Als für die Adduktbildung mit dem Germaniumdihalogenid geeignete Ether sind vorzugsweise offenkettige Verbindungen mit der Formel $R^1OR^2$ einzusetzen, wobei $R^1$ und $R^2$ einwertige, unverzweigte oder verzweigte, alicyclische oder aromatische Kohlenwasserstoffreste mit vorzugsweise 1 bis 18 Kohlenstoffatomen oder einwertige Reste der Formel $-(CH_2)_nO(CH_2)_mR^3$ bedeuten, mit n gleich einer Zahl von 1 bis 8, m gleich einer Zahl von 0 bis 8 und $R^3$ gleich einem Alkylrest mit 1 bis 14 Kohlenstoffatomen oder einem Arylrest mit 6 bis 18 Kohlenstoffatomen. Ebenso vorteilhaft ist der Einsatz cyclischer Ether mit der Formel

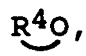

wobei $R^4$ für einen zweiwertigen, unverzweigten oder verzweigten Kohlenwasserstoffrest mit 4 bis 6 Kohlenstoffatomen steht oder einen zweiwertigen Rest mit der Formel $-(CH_2)_sO(CH_2)_t$-bedeutet, wobei für s und t Zahlen von 2 bis 6 einzusetzten sind.

Gegebenenfalls findet die erfindungsgemäße Reduktion in Gegenwart eines daran unbeteiligten, organischen Lösemittels oder Lösemittelgemisches statt. Als besonders geeignet erweisen sich gesättigte aliphatische oder aromatische Kohlenwasserstoffe, insbesondere solche, deren Siedepunkte im Bereich der bevorzugten Reaktionstemperaturen von 20 bis 120 °C liegen. Besonders vorteilhaft sind Pentan, Hexan, Cyclohexan, Benzol und Toluol.

Alle im Herstellungsverfahren eingesetzten Reagenzien müssen im wesentlichen wasserfrei sein. Die Umsetzung selbst soll unter Ausschluß von Feuchtigkeit durchgeführt werden.

Die besonders bevorzugte Ausführungsform des erfindungsgemäßen Verfahrens ist die Herstellung des Adduktes von Germaniumdichlorid mit 1,4-Dioxan. Bringt man Germaniumtetrachlorid mit der stöchiometrischen Menge Triethylsilan und 1,4-Dioxan unter dem Zusatz einer katalytischen Menge von Lithiumaluminiumhydrid für 5 bis 100 Stunden, vorzugsweise 20 bis 30 Stunden, bei 20 bis 120 °C, vorzugsweise bei 80 bis 110 °C, in Toluol zur Umsetzung, so bilden sich gemäß der nachstehenden Gleichung das Germaniumdichlorid-1,4-Dioxan-Addukt, Chlorwasserstoff und Triethylchlorsilan. Die Produkte sind auf einfache Weise voneinander zu trennen: Chlorwasserstoff verflüchtigt sich als Gas, das Addukt kristallisiert beim Abkühlen nahezu vollständig aus der toluolischen Lösung aus, während Triethylchlorsilan und gegebenenfalls nicht umgesetztes Triethylsilan gelöst bleiben.

$$GeCl_4 + (C_2H_5)_3SiH + C_4H_8O_2 \rightarrow GeCl_2.(C_4H_8O_2) + (C_2H_5)_3SiCl + HCl$$

Im folgenden sind ausgeführte Beispiele des erfindungsgemäßen Herstellungsverfahrens beschrieben. Die Beispiele sind selbstverständlich nicht im Sinne einer Beschränkung der Erfindung auf die darin getroffenen Maßnahmen oder verwendeten Reagenzien zu verstehen.

Beispiel 1)

Herstellung des Addukts von Germaniumdichlorid mit 1,4-Dioxan unter Verwendung von Triethylsilan als hydridischem Reduktionsmittel

Eine Lösung von 4,032 g Germaniumtetrachlorid (18,81 mmol) in 7 ml Toluol und 1,6 ml 1,4-Dioxan (18,81 mmol) wurde zunächst mit 4,00 g Triethylsilan (29,70 mmol) und dann mit zwei Spatelspitzen Lithiumaluminiumhydrid (ca. 0,04 mol% bezogen auf Germaniumtetrachlorid) versetzt. Die anfangs farblose Lösung wurde unter kräftigem Rühren

auf 100°C Ölbadtemperatur erhitzt. Das Ende der Reaktion wurde durch schwach einsetzende Gelbfärbung bei Kristallisation des Produkts angezeigt. Zu diesem Zeitpunkt wurde die Reaktion durch Kühlung auf -30 °C gestoppt. Die sich zur Produktisolierung anschließende Filtration mittels einer G3-Glasfritte wurde unter Schutzgas (Argon oder Stickstoff) durchgeführt. Der Fritteninhalt wurde dreimal mit jeweils 5 ml wasserfreiem Pentan gewaschen und zuletzt eine Stunde im Vakuum einer Ölpumpe getrocknet. Die Ausbeute des bereits analysenreinen Produktes mit der Formel $GeCl_2.(C_4H_8O_2)$ betrug 85 %, bezogen auf die eingesetzte Germaniumtetrachlorid-Menge. Eine Ansatzvergrößerung um das zehn- bis zwanzigfache war problemlos möglich, wobei sich die Produktausbeuten im Bereich von 85 bis 92 % bewegten. Bei einer Verlängerung der Reaktionsdauer über den angegebenen Endpunkt hinaus konnte nach Kühlung des Ansatzes und Kristallisation das $GeCl_2.(C_4H_8O_2)$ durch Umkristallisieren mit Hilfe siedenden Toluols von orangebraun gefärbten Nebenprodukten gereinigt werden.

Eine ohne Lithiumaluminiumhydrid, aber ansonsten unter identischen Bedingungen durchgeführte Umsetzung lieferte trotz Umkristallisieren in Toluol ein stark verunreinigtes Produkt in einer Ausbeute von 17 %. Die Produktidentität wurde in beiden Fällen durch NMR-Spektroskopie, IR-Spektroskopie und Elementaranalyse bestätigt.

Beispiel 2)

Herstellung des Addukts von Germaniumdibromid mit 1,4-Dioxan unter Verwendung von Triethylsilan als hydridischem Reduktionsmittel

Eine Lösung von 38,9 g Germaniumtetrabromid (0,1 mol) in 60 ml Toluol und 8,42 ml Dioxan (0,1 mol) wurde zunächst mit 21,2 g Triethylsilan (0,16 mol) und anschließend mit ca. 50 mg Lithiumaluminiumhydrid versetzt. Das Reaktionsgemisch wurde 24 Stunden auf einem Ölbad mit einer Badtemperatur von 100°C erhitzt, wobei sich farblose Kristalle abschieden. Die Aufarbeitung wie im Beispiel 1 beschrieben ergab als Produkt das Germaniumdibromid-1,4-Dioxan-Addukt in einer Ausbeute von 75 %. Das Produkt wurde NMR- und IR-spektroskopisch sowie mittels Elementaranalyse identifiziert.

Beispiel 3)

Herstellung des Addukts von Germaniumdichlorid mit 1,4-Dioxan unter Verwendung von Diphenylchlorsilan als hydridischem Reduktionsmittel

Eine Lösung von 4,032 g Germaniumtetrachlorid (18,81 mmol) in 7 ml Toluol und 1,6 ml Dioxan (18,81 mmol) wurde zunächst mit 6,50 g Diphenylchlorsilan (29,7 mmol) und dann mit zwei Spatelspitzen Lithiumaluminiumhydrid (ca. 0,04 mol% bezogen auf Germaniumtetrachlorid) versetzt und wie im Beispiel 1 beschrieben umgesetzt und aufgearbeitet. Das Produkt wurde aus Toluol umkristallisiert und identifiziert. Die Ausbeute betrug 75 %.

Beispiel 4)

Herstellung des Addukts von Germaniumdichlorid mit 1,4-Dioxan unter Verwendung von Dimethylchlorsilan oder Trichlorsilan als hydridischem Reduktionsmittel

Eine Lösung von 4,032 g Germaniumtetrachlorid (18,81 mmol) in 7 ml Toluol und 1,6 ml Dioxan (18,81 mmol) wurde in einem mit Argon gespülten, beheizbaren 250 ml Schüttelautoklaven mit zwei Spatelspitzen Lithiumaluminiumhydrid (ca. 0,04 mol% bezogen auf Germaniumtetrachlorid) versetzt. Daraufhin wurden bei -40°C 2,81 g Dimethylchlorsilan (29,7 mmol) zukondensiert. Anschließend wurde der Autoklaveninhalt unter Schütteln 24 Stunden auf einem Ölbad bei 100°C Badtemperatur erwärmt. Nach Abkühlung auf Raumtemperatur wurde der Überdruck abgelassen und die Reaktionsmischung wie in Beispiel 1 beschrieben aufgearbeitet. Die Produktausbeute betrug 90 %.

Eine analog durchgeführte Umsetzung mit Trichlorsilan als hydridischem Reduktionsmittel lieferte das erwartete Produkt in einer Ausbeute von 74 %.

Mit dem erfindungsgemäßen Verfahren ist es nun möglich, Halogenide des zweiwertigen Germaniums als Addukte mit einem Ether in einer mit einfachen Mitteln durchführbaren, einstufigen Reaktion, in beliebigen Ansatzgrößen und bei hohen Ausbeuten, herzustellen. Letztendlich bereitet das Herstellungsverfahren einen wesentlich verbesserten Zugang zur Chemie des zweiwertigen Germaniums.

## Patentansprüche

1. Verfahren zur Herstellung von Addukten eines Germaniumdihalogenids mit einem Ether, insbesondere die Herstellung eines Adduktes von Germaniumdichlorid mit 1,4-Dioxan, dadurch gekennzeichnet, daß

ein Germaniumtetrahalogenid mit einem Organosilan als Reduktionsmittel unter Zusatz eines Metallhydrids in Anwesenheit eines Ethers und gegebenenfalls in Anwesenheit eines organischen Lösemittels umgesetzt wird.

2. Verfahren nach Anspruch 1, dadurch gekennzeichnet, daß das Reduktionsmittel in Mengen von 1,0 bis 2,5 Moläquivalenten bezogen auf das Germaniumtetrahalogenid eingesetzt wird.

3. Verfahren nach Anspruch 1 oder 2, dadurch gekennzeichnet, daß als Reduktionsmittel ein Organosilan mit der Formel $R_{4-n}SiH_n$ verwendet wird, wobei n eine ganze Zahl von 1 bis 3 darstellt und R ein einwertiger aliphatischer Rest mit 1 bis 12 Kohlenstoff-Atomen oder ein cycloaliphatischer oder aromatischer Rest mit 6 bis 18 Kohlenstoff-Atomen oder eine Trialkylsilyl-Gruppe ist.

4. Verfahren nach einem oder mehreren der Ansprüche 1 bis 3, dadurch gekennzeichnet, daß das Metallhydrid zumindest in katalytischen Mengen von 0,01 bis 0,1 mol% bezogen auf das Germaniumtetrahalogenid eingesetzt wird.

5. Verfahren nach einem oder mehreren der Ansprüche 1 bis 4, dadurch gekennzeichnet, daß ein ionisch oder komplex aufgebautes Metallhydrid verwendet wird.

6. Verfahren nach einem oder mehreren der Ansprüche 1 bis 5, dadurch gekennzeichnet, daß als Ether für die Umsetzung offenkettige Verbindungen mit der Formel $R^1OR^2$ oder

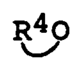

ausgewählt werden, wobei $R^1$ und $R^2$ einwertige, unverzweigte oder verzweigte, alicyclische oder aromatische Kohlenwasserstoffreste mit 1 bis 18 Kohlenstoff-Atomen oder einwertige Reste der Formel $-(CH_2)_nO(CH_2)_mR^3$ bedeuten, mit n gleich einer Zahl von 1 bis 8, m gleich einer Zahl von 0 bis 8 und $R^3$ gleich einem Alkylrest mit 1 bis 14 Kohlenstoff-Atomen oder einem Arylrest mit 6 bis 18 Kohlenstoff-Atomen, und wobei $R^4$ für einen zweiwertigen, unverzweigten oder verzweigten Kohlenwasserstoffrest mit 4 bis 6 Kohlenstoff-Atomen oder für einen zweiwertigen Rest mit der Formel $-(CH_2)_sO(CH_2)_t-$ steht, mit s und t gleich einer Zahl von 2 bis 6.

7. Verfahren nach einem oder mehreren der Ansprüche 1 bis 6, dadurch gekennzeichnet, daß die Umsetzung bei einer Temperatur von 20 bis 120°C erfolgt.

8. Verfahren nach einem oder mehreren der Ansprüche 1 bis 7, dadurch gekennzeichnet, daß die Umsetzung in einem Zeitraum von 5 bis 100 Stunden erfolgt.

## Claims

1. Process for the preparation of adducts of a germanium dihalide with an ether, in particular the preparation of an adduct of germanium dichloride with 1,4-dioxane, characterized in that a germanium tetrahalide is reacted with an organosilane as reducing agent with the addition of a metal hydride in the presence of an ether and optionally in the presence of an organic solvent.

2. Process according to Claim 1, characterized in that the reducing agent is used in amounts of from 1.0 to 2.5 mol equivalents, based on the germanium tetrahalide used.

3. Process according to Claim 1 or 2, characterized in that the reducing agent used is an organosilane of the formula $R_{4-n}SiH_n$ in which n is an integer of from 1 to 3 and R is a monovalent aliphatic radical having from 1 to 12 carbon atoms or a cycloaliphatic or aromatic radical having from 6 to 18 carbon atoms or a trialkyl silyl group.

4. Process according to one or more of Claims 1 to 3, characterized in that the metal hydride is used at least in catalytic amounts of from 0.01 to 0.1 mol%, based on the germanium tetrahalide used.

5. Process according to one or more of Claims 1 to 4, characterized in that a metal hydride of ionic or complex structure is used.

6. Process according to one or more of Claims 1 to 5, characterized in that the ethers selected for the reaction are open-chain compounds of the formula $R^1OR^2$ or

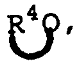

in which $R^1$ and $R^2$ denote monovalent, straight-chain or branched, alicyclic or aromatic hydrocarbon radicals having from 1 to 18 carbon atoms or monovalent radicals of the formula $-(CH_2)_nO(CH_2)_mR^3$ where n is a number from 1 to 8, m is a number from 0 to 8 and $R^3$ is an alkyl radical having from 1 to 14 carbon atoms or an aryl radical having from 6 to 18 carbon atoms, and in which $R^4$ represents a divalent, straight-chain or branched hydrocarbon radical having from 4 to 6 carbon atoms or represents a divalent radical of the formula $-(CH_2)_sO(CH_2)_t-$, where s and t are a number of from 2 to 6.

7. Process according to one or more of Claims 1 to 6, characterized in that the reaction is carried out at a temperature of from 20 to 120°C.

8. Process according to one or more of Claims 1 to 7, characterized in that the reaction is carried out over a period of from 5 to 100 hours.

**Revendications**

1. Procédé de préparation de produits d'addition d'un dihalogénure de germanium avec un éther, en particulier la préparation d'un produit d'addition du dichlorure de germanium avec le 1,4-dioxanne, caractérisé en ce que l'on fait réagir un tétrahalogénure de germanium avec un organosilane en tant qu'agent réducteur, avec addition d'un hydrure métallique en présence d'un éther et, éventuellement en présence d'un solvant organique.

2. Procédé selon la revendication 1, caractérisé en ce que l'agent réducteur est utilisé dans des quantités de 1,0 à 2,5 équivalents molaires, par rapport au tétrahalogénure de germanium.

3. Procédé selon la revendication 1 ou 2, caractérisé en ce que l'on utilise en tant qu'agent réducteur un organosilane de formule $R_{4-n}SiH_n$, n représentant un nombre entier de 1 à 3 et R étant un résidu aliphatique monovalent ayant de 1 à 12 atomes de carbone ou un résidu cycloaliphatique ou aromatique ayant de 6 à 18 atomes de carbone ou un groupement trialkylsilyle.

4. Procédé selon l'une quelconque des revendications 1 à 3, caractérisé en ce que l'on utilise l'hydrure métallique au moins dans des quantité catalytiques de 0,01 à 0,1 % en moles, par rapport au tétrahalogénure de germanium.

5. Procédé selon l'une quelconque des revendications 1 à 4, caractérisé en ce que l'on utilise un hydrure métallique sous forme ionique ou sous forme d'un complexe.

6. Procédé selon l'une quelconque des revendications 1 à 5, caractérisé en ce que l'on choisit, en tant qu'éther pour la réaction, des composés à chaîne ouverte de formule $R^1OR^2$ ou

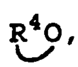

$R^1$ et $R^2$ désignant des résidus d'hydrocarbures monovalents, alicycliques ou aromatiques, non ramifiés ou ramifiés, ayant de 1 à 18 atomes de carbone, ou des résidus monovalents de formule $-(CH_2)_nO(CH_2)_mR^3$, n étant égal à un nombre de 1 à 8, m étant égal à un nombre de 0 à 8 et $R^3$ étant un résidu alkyle ayant de 1 à 14 atomes de carbone, ou un résidu aryle ayant de 6 à 18 atomes de carbone, et $R^4$ représentant un résidu d'hydrocarbure bivalent, non ramifié ou ramifié, ayant de 4 à 6 atomes de carbone, ou un résidu bivalent de formule $-(CH_2)_sO(CH_2)_t-$, s et t étant égaux à un nombre de 2 à 6.

7. Procédé selon l'une quelconque des revendications 1 à 6, caractérisé en ce que la réaction se produit à une température de 20 à 120°C.

**8.** Procédé selon l'une quelconque des revendications 1 à 7, caractérisé en ce que la réaction se produit pendant une durée de 5 à 100 heures.